Europäisches Patentamt

European Patent Office

Office européen des brevets

(11) Veröffentlichungsnummer: **0 433 543 A2**

# (12) EUROPÄISCHE PATENTANMELDUNG

(21) Anmeldenummer: 90114505.2

(22) Anmeldetag: 27.07.90

(51) Int. Cl.5: **B60N 3/10**

(30) Priorität: 22.12.89 DE 8915106 U

(43) Veröffentlichungstag der Anmeldung:
26.06.91 Patentblatt 91/26

(84) Benannte Vertragsstaaten:
FR GB IT

(71) Anmelder: Chou, Ching-Yuan
No. 7, Alley 11, Lane 382, Sec. 3, Ho Ping W.
Road
Taipei(TW)

(72) Erfinder: Chou, Ching-Yuan
No. 7, Alley 11, Lane 382, Sec. 3, Ho Ping W.
Road
Taipei(TW)

(74) Vertreter: von Puttkamer, Nikolaus, Dipl.-Ing.
Pienzenauerstrasse 2
W-8000 München 80(DE)

(54) **Befestigungseinrichtung zur Befestigung einer Getränkebüchse in einem Automobil.**

(57) Die Erfindung betrifft eine Befestigungseinrichtung zur Befestigung einer Getränkebüchse in einem Fahrzeug. Die Befestigungseinrichtung kann in den Spalt zwischen der Glasscheibe des Fahrzeugfensters und den Fensterrahmen eingeführt oder an dem Sperrzapfen der Fahrzeugtür befestigt werden. Die Befestigungseinrichtung umfaßt einen Befestigungsring, der über ein Einhängeteil mit einem Griffbereich verbunden ist. Das untere Ende des Befestigungsringes weist einen mit Widerhaken bzw. Eingriffsteilen versehen Ringbereich auf, um den runden Nutbereich am oberen Ende der Getränkebüchse zu halten bzw. in diesen einzugreifen.

FIG.1

## BEFESTIGUNGSEINRICHTUNG ZUR BEFESTIGUNG EINER GETRÄNKEBÜCHSE IN EINEM AUTOMOBIL

Die vorliegende Neuerung betrifft eine Befestigungseinrichtung zur Befestigung einer Getränkebüchse in einem Automobil.

Gegenwärtig wird das Automobil als ein geeignetes Transportmittel betrachtet. Sein Vorteil besteht darin, daß es bequem und schnell ist. Aus diesem Grunde ist das Automobil in unserem täglichen Leben unverzichtbar. Der Innenraum eines Automobils ist jedoch begrenzt. Während einer Fahrt über eine lange Strecke fühlt sich der Fahrer oft unpäßlich. Insbesondere sind Getränke in einem Wagen schwierig handzuhaben, weil für sie kein geeigneter Ort zur Verfügung steht, an dem sie gehalten werden können. In dem Fall, in dem das Getränk während der Fahrt des Wagens verschüttet wird, kann die Konzentration des Fahrers beeinträchtigt werden. Dabei kann ein Unfall verursacht werden. Bei den meisten Getränken handelt es sich um sehr süße Flüssigkeiten. Wenn derartige Flüssigkeiten über die Wagenbezüge oder auf die Kleidung des Fahrers geschüttet werden, ist dies sehr unangenehm.

Die Hauptaufgabe der vorliegenden Neuerung besteht darin, eine Befestigungseinrichtung zur Befestigung einer Getränkebüchse in einem Automobil anzugeben. Die Befestigungseinrichtung kann sehr billig und einstückig aus einem Kunststoffmaterial hergestellt werden. Sie kann nach dem Gebrauch weggeworfen werden. Wenn die vorliegende Neuerung in einem Wagen verwendet wird, wird die Konzentration des Fahrers nicht dadurch beeinträchtigt, daß er darauf achten muß, das in einer Büchse befindliche Getränk nicht zu verschütten.

Eine weitere Aufgabe der Neuerung besteht darin, eine Befestigungseinrichtung für eine Getränkebüchse anzugeben, bei der der Befestigungsring für die Büchse einen speziellen mit Widerhaken versehenen Ringbereich zum sicheren und einfachen Halten einer Getränkebüchse aufweist. Da die Größe und die Form von Getränkebüchsen aus Aluminium weltweit einem Standard entsprechen, kann die neuerungsgemäße Befestigungseinrichtung in großem Umfang im Zusammenhang mit Getränkebüchsen angewendet werden.

Im folgenden wird eine bevorzugte Ausführungsform der Neuerung beispielhaft im Zusammenhang mit den Figuren näher erläutert. Es zeigt:

Fig. 1    in perspektivischer Darstellung eine Ausführungsform der Neuerung;

Fig. 2    eine Aufsicht der Neuerung von oben;

Fig. 3    zum Teil im Schnitt eine Seitenansicht der Neuerung;

Fig. 4    eine perspektivische Darstellung, die eine neuerungsgemäße Befestigungseinrichtung zeigt, die im Wageninneren befestigt ist; und

Fig. 5    eine weitere perspektivische Darstellung, die eine neuerungsgemäße Befesetigungseinrichtung zeigt, die an einem anderen Ort in dem Wagen befestigt ist.

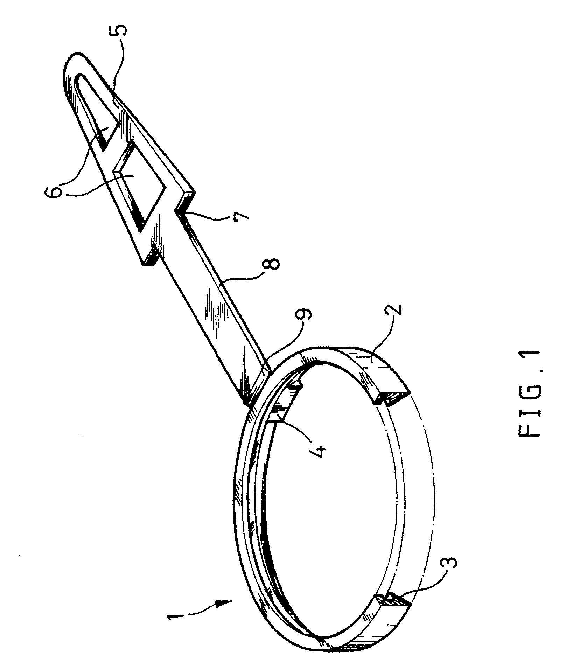

Die Fig. 1, 2 und 3 zeigen, daß die Befestigungseinrichtung 1 für Getränkebüchsen einen Befestigungsring 2 mit einem mit Widerhaken versehenen Ring 3 aufweist. Der Ring 3 dient dazu, den mit einer Nut versehenen Bereich einer Getränkebüchse zu ergreifen. Ein Verbindungteil 4 ist zwischen dem Befestigungsring 2 und einem Einhängeband bzw. Einhängeteil 8 vorgesehen, um zu verhindern, daß die Getränkebüchse herabfällt. Das hintere Ende des Einhängeteiles 8 weist eine nach oben weisende Nut 9 auf. Wenn der Befestigungsring das Gewicht der Getränkebüchse trägt, wird der Öffnungsbereich der Nut 9 kleiner. Eine weitere Nut 7 ist zwischen dem Griffbereich 5 und dem Einhängeteil 8 vorgesehen. Der Öffnungsbereich der Nut 7 ist jedoch nach unten gewandt. Wenn das Einhängeteil 8 das Gewicht einer Getränkebüchse trägt, wird der Öffnungsbereich der Nut 7 kleiner. Die Dicke des hinteren Endes des Griffbereiches 5 verkleinert sich allmählich, so daß das Einführen des Griffbereiches 5 in den Spalt zwischen dem Fensterglas und dem Fensterrahmen erleichtert wird. Der Griffbereich 5 kann auch an dem Sperrzapfen der Wagentür mit der Hilfe des in dem Griffbereich 5 vorgesehenen Einhängeloches 6 befestigt werden.

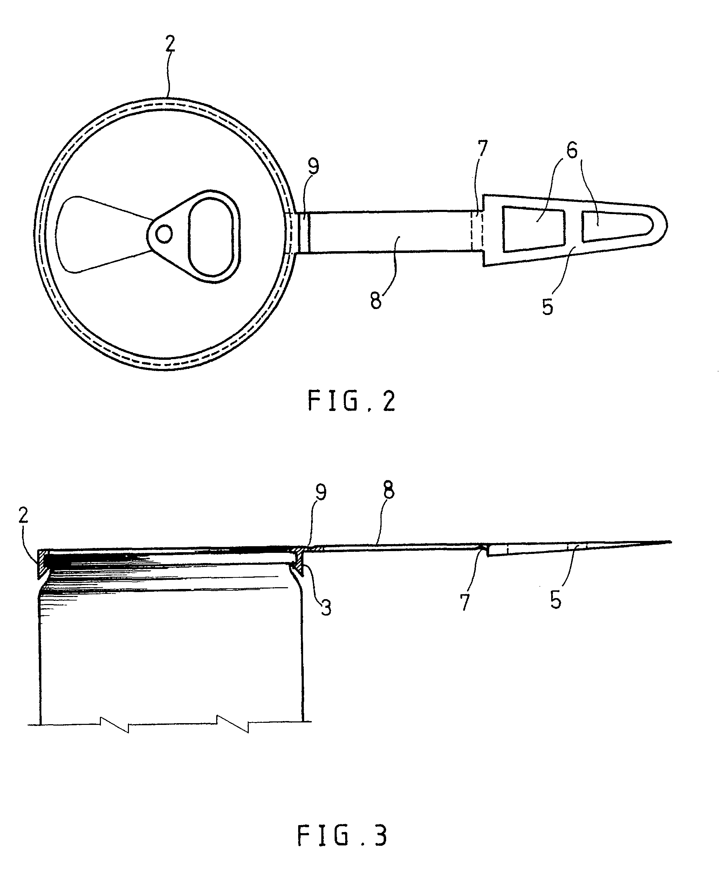

Die Fig. 3 zeigt, daß eine Getränkebüchse leicht in der Befestigungseinrichtung 1 dadurch befestigt werden kann, daß der Befestigungsring 2 über den oberen Bereich der Getränkebüchse gesetzt und leicht nach unten gedrückt wird. Da der untere Rand des Befestigungsringes 2 einen mit Widerhaken versehenen ringförmigen Bereich 3 aufweist, kann die Getränkebüchse festgehalten werden, ohne daß sie herabfällt bzw. ausläuft.

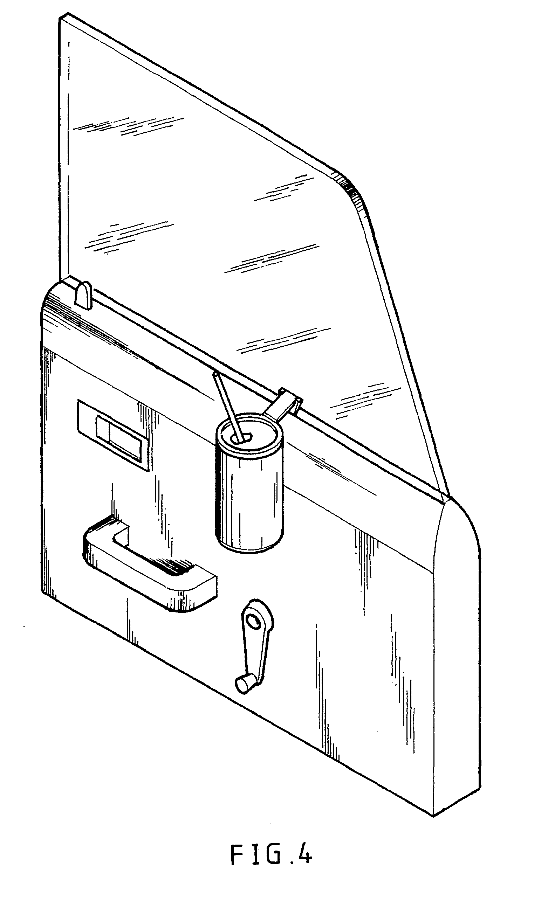

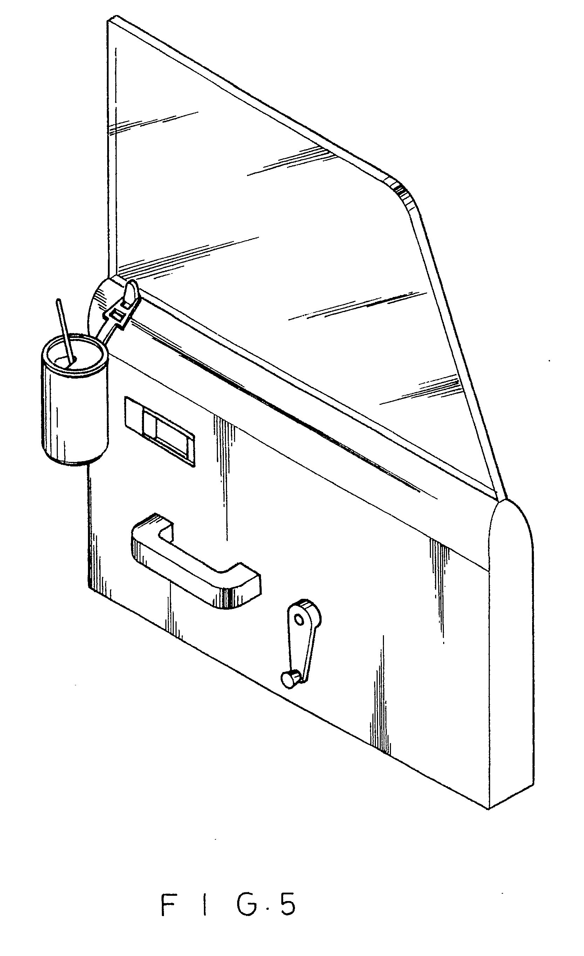

Die Fig. 4 und 5 zeigen zwei Arten der Befestigung der Befestigungseinrichtung 1 an der Wagentür oder an dem Sperrzapfen 10 des Wagenfensters, so daß einer in dem Wagen befindlichen Person das Trinken aus der Büchse erleichtert wird.

Die Neuerung betrifft eine Befestigungseinrichtung zur Befestigung einer Getränkebüchse in einem Automobil. Die Befestigungseinrichtung kann in den Spalt zwischen dem Fensterglas und dem Fensterrahmen eingeschoben oder an dem Sperrzapfen der Wagentür befestigt werden. Die Befestigungseinrichtung umfaßt einen Befestigungsring, der durch ein Einhängeteil mit einem Griffbereich verbunden ist. Der untere Rand des Befestigungsringes ist so geformt, daß ein mit Widerhaken versehener Ringbereich entsteht, der den runden Nutbereich des oberen Endes der Getränkebüchse hält.

Die Widerhaken weisen vorzugsweise die Form von mit Einfahrschrägen versehenen hakenförmigen Teilen auf, die beim Aufdrücken des Befestigungsringes auf die Büchse ausfedern und danach wieder einfedern und in die genannte Nut der Büchse einrasten.

Das sich Verengen der Öffnungsbereiche der Nuten 7 und 9 des Einhängeteiles 8 ist insbesondere aus den Figuren 4 und 5 ersichtlich, die zeigen, welche Winkel zwischen dem Befestigungsring 2, dem Einhängeteil 8 und dem Griffteil 5 in der Gebrauchslage bestehen.

Die Frfindung betrifft eine Befestigungseinrichtung zur Befestigung einer Getränkebüchse in einem Fahrzeug. Die Befestigungseinrichtung kann in den Spalt zwischen der Glasscheibe des Fahrzeugfensters und den Fensterrahmen eingeführt oder an dem Sperrzapfen der Fahrzeugtür befestigt werden. Die Befestigungseinrichtung umfaßt einen Befestigungsring, der über ein Einhängeteil mit einem Griffbereich verbunden ist. Das untere Ende des Befestigungsringes weist einen mit Widerhaken bzw. Eingriffsteilen versehen Ringbereich auf, um den runden Nutbereich am oberen Ende der Getränkebüchse zu halten bzw. in diesen einzugreifen.

## Ansprüche

1. Befestigungseinrichtung zur Befestigung einer Getränkebüchse in einem Automobil, gekennzeichnet durch:
   - einen Befestigungsring (2), dessen unterer Rand so geformt ist, daß ein mit nach innen weisenden Widerhaken versehener Ringbereich (3) gebildet ist, der eine Getränkebüchse durch Eingreifen des Ringbereiches (3) in den Nutbereich am oberen Ende der Getränkebüchse hält,
   - einen Griffbereich (5), der in einen Spalt zwischen einem Fensterglas und einem Fensterrahmen des Automobils einführbar ist, und ein Einhängeteil (8) das den Befestigungsring (2) mit dem Griffbereich (5) verbindet.

2. Einrichtung nach Anspruch 1, dadurch gekennzeichnet, daß der Griffbereich (5) wenigstens ein Einhängeloch (6) zur Befestigung des Griffbereiches (5) an dem Sperrzapfen einer Automobiltür aufweist.

3. Einrichtung nach Anspruch 1 oder 2, dadurch gekennzeichnet, daß jedes Ende des Einhängeteiles (8) eine Nut (7, 9) derart aufweist, daß ein Öffnungsbereich der Nut (7, 9) in der Gebrauchslage kleiner wird, wenn der Befestigungsring (2) eine Getränkebüchse festhält.

FIG.1

EP 0 433 543 A2

FIG. 2

FIG. 3

FIG.4

F I G·5